# EUROPÄISCHE PATENTSCHRIFT

(11) **EP 1 415 910 B1**
(45) Veröffentlichungstag und Bekanntmachung des Hinweises auf die Patenterteilung: **14.03.2007**
(21) Anmeldenummer: 03019728.9
(22) Anmeldetag: 29.08.2003
(51) Int. Cl.: B65B 9/20

(54) **Vertikale Schlauchbeutelmaschine**
Vertical bag forming, filling and sealing machine
Machine verticale de formation, remplissage et scellage de sacs tubulaires

(30) Priorität: 02.11.2002 DE 10251068
(43) Veröffentlichungstag der Anmeldung: 06.05.2004
(73) Patentinhaber: ROVEMA VERPACKUNGSMASCHINEN GMBH, 35463 Fernwald (DE)
(72) Erfinder: Kammler, Roman, Dr., 67547 Worms (DE); Kuss, Gerhard, 35584 Wetzlar (DE); Braun, Harald, 35305 Grünberg (DE); Baur, Walter, Dr., 63584 Gründau (DE)

(56) Entgegenhaltungen:
- DE-A- 2 323 599
- DE-A- 2 721 550
- GB-A- 528 833
- US-A- 3 538 676
- US-B1- 6 182 426

## Beschreibung

Die Erfindung betrifft eine vertikale Schlauchbeutelmaschine gemäß dem Oberbegriff des Anspruchs 1. Eine solche Maschine ist aus der JP-A-3-85208 bekannt.

Vertikale Schlauchbeutelmaschinen an sich sind hinlänglich bekannt. Derartige Verpackungsmaschinen dienen dazu, Schlauchbeutel aus einer von einer Vorratsrolle abgewickelten Folienbahn zu erzeugen. Die ebene Folienbahn wird dazu an einer Umlenkkante einer Formschulter zu einem Folienschlauch umgeformt. Die Umlenkkante erstreckt sich in vertikaler und in horizontaler Richtung. Zu ihrer Beschreibung ist also eine Angabe von Raumkoordinaten notwendig. In jedem Fall weist sie aber innerhalb einer Horizontalebene, auf welche die Raumkoordinaten projeziert werden können, nur Koordinatenpunkte auf, welche jeweils durch zwei Abstandswerte bestimmt sind, nämlich einen Breitenwert und einen Tiefenwert. Die zu einem Folienschlauch umgeformte Folienbahn wird sodann mittels eines Füllrohres, welches einen kreisförmigen Querschnitt aufweist, befüllt und verschweißt, um einen befüllten, relativ dicken Schlauchbeutel zu erzeugen. Dieser wird schließlich vom Folienschlauch mittels einer Trenneinrichtung abgetrennt. Das Füllrohr ist vertikal.ausgerichtet.

Das bekannte, zylinderförmige Füllrohr erzeugt zunächst einen zylinderförmigen Folienschlauch, welcher nachfolgend insofern abgeflacht wird, als er von einer Quersiegeleinrichtung quer zu seiner Transportrichtung zusammengedrückt und derart verschweißt wird.

Das bekannte, zylinderförmige Füllrohr hat den Nachteil, dass es für eine Erzeugung von sehr flachen Beuteln nicht geeignet ist. Zum anderen ist es auch nicht üblich, diese Flachbeutel mittels vertikaler Schlauchbeutelmaschinen herzustellen. In der Regel werden sogenannte Horizontalmaschinen zum Erzeugen von Flachbeuteln verwendet. Diese Maschinen haben dabei den Nachteil, dass die flachen, nicht standfähigen Beutel mittels Klammem oder Greifem gehandhabt werden, was relativ umständlich und daher leistungsmindernd ist. Zudem muss die Folienbahn angehalten werden, wenn eine Produktabgabe erfolgt, was ebenfalls die Verpackungsgeschwindigkeit beschränkt. Zwar gibt es mitlaufende Befüllstationen, diese verteuem eine Verpackungsanlage jedoch deutlich, so dass ihr Einsatz nur fallweise vorkommt.

Der Erfindung liegt die Aufgabe zu Grunde, eine vertikale Schlauchbeutelmaschine der eingangs beschriebenen Art dahingehend weiterzuentwickeln, dass sie für eine Herstellung von Flachbeuteln, also Beutel mit vergleichsweise geringer Dicke, geeignet ist.

Gelöst ist die Aufgabe gemäß dem kennzeichnenden Teil des Anspruchs 1.

Das Füllrohr hat den Vorteil, dass es zum Fertigen von Flachbeuteln geeignet ist. Die relativ große Breite des Füllrohres führt zu relativ breiten Beuteln. Die relativ kleine Tiefe des Füllrohres bewirkt, dass der Folienschlauch eine vergleichsweise geringe Tiefe aufweist, welche eine geringe Beuteldicke vorgibt. Die Begriffe "Breite" und "Tiefe" sind so zu verstehen, dass sie einen direkten Bezug auf die Beutelform haben. Das Füllrohr erzeugt einen flachen Folienschlauch, welcher an die zu erzielenden Flachbeutel angepasst ist. Der Folienschlauch muss dabei der gewünschten Beutelform nicht exakt entsprechen. Es genügt, wenn der Folienschlauch genügend abgeflacht ist, um anschließend nur eine geringe weitergehende Deformation des Folienschlauches hin zum Schlauchbeutel zu erreichen. Das abgeflachte Füllrohr führt insgesamt dazu, dass die Folienbahn leichtgängiger, faltenfreier und ortsgenauer zu einer Flachbeutelform geführt wird. Dabei wird ein auf der Folienbahn vorhandenes Druckbild ortsgenau auf die Vorderseite und die Rückseite des Flachbeutels gebracht.

Die erfindungsgemäße vertikale Schtauchbeutetmaschine hat weiterhin den Vorteil, dass Flachbeutel mit sehr hoher Maschinenleistung produziert werden können. Die bisher übliche Methode der Flachbeutelherstellung mittels horizontaler Verpackungsmaschinen, bei welcher in leistungsmindernder getakteter Arbeitsweise eine Handhabung der zu erzeugenden und zu befüllenden Flachbeutel erfolgt, kann somit durch eine schnellere kontinuierliche Verpackungsmethode der vertikalen Schlauchbeutelmaschine ersetzt werden.

Weitere, vorteilhaften Ausgestaltungen der Erfindung sind in den Ansprüchen 2 bis 6 beschrieben.

Eine deutliche Abflachung des Folienschlauches ist erreicht, wenn die Breite des Füllrohres mindestens anderthalb mal so groß wie deren Tiefe ist. In der Praxis erweist sich eine doppelt so große Breite wie Tiefe als günstig, sowohl bezüglich der Beutelform als auch bezüglich eines leichtgängigen Folienlaufs.

Der abgeflachte Folienschlauch wird formstabil der Beutelerzeugung zugeführt, wenn eine Schlauchbeutelmaschinen ein Füllrohr aufweist, dessen Breite größer als dessen Tiefe ist, insbesondere mindestens anderthalb mal so groß.

Die Schlauchbeutelmaschine ist dann optimal auf die Form der zu erreichenden Flachbeutel abgestimmt, wenn das Breite/Tiefe-Verhältnis der Umlenkkante dem Breite/Tiefe-Verhältnis des Füllrohres entspricht, insbesondere wenn es ebenso größer als 1, vorzugsweise mindestens 1,5 beträgt. Dies gilt auch für die Form eines Füllrohres, das zwei parallel zueinander und parallel zur Breite des Füllrohres ausgerichtete Rohrwände aufweist. Weist nämlich die Umlenkkante ein gekrümmtes Mittelstück auf, an welches sich beidseits ein gerades Schenkelstück anschließt, so wird eine besonders gute Beutelform erreicht. Die Schenkelstücke führen die Folienbahn in eine Schlauchform, welche zwei parallel zueinander ausgerichtete Schlauchwände aufweist. Diese Schlauchwände machen die beiden großen Seitenwände der Flachbeutel aus. Ein weiterer Vorteil dieser Form der Umlenkkante besteht darin, dass sie relativ einfach hergestellt werden kann, da diese geraden Bauteile in einfacher Weise schnell und präzise gefertigt werden können. Dies gilt auch für das gekrümmte Mittelstück, wenn dieses die Form eines Halbkreises oder einer Halbellipse aufweist.

An den beiden Schmalseiten des Füllrohres ist jeweils ein Folienauslenker zum Auslenken des Folienschlauches vorgesehen, der sich vorzugsweise über die gesamte Länge des Füllrohres erstreckt. So werden die seitlichen Ränder des abgeflachten Füllrohres ausgelenkt und ortsgenau der Quersiegeleinrichtung zugeführt. Dabei sind mehrere geometrische Formen für die Ausgestaltung der Folienauslenker geeignet, wie z. B. eine Kreisbogenform, eine spitze Formgebung, sowie die Form einer abgerundeten Spitze. Diese Formen sind für den Querschnitt des Füllrohres in Richtung quer zu seiner Mittelachse vorgesehen.

Auf gegenüberliegenden Seiten des Füllrohres ist jeweils eine Längssiegeleinrichtung zum Verschweißen eines Schlauchrandes vorgesehen. So können derart gegenüberliegende Ränder des abgeflachten Folienschlauches, oder der erzeugten Flachbeutel verschweißt werden, um eine flache, nach einer Beutelbefüllung noch weniger ausbauchende Beutelform zu erreichen.

Im folgenden wird die Erfindung an Hand von Ausführungsbeispiele darstellenden Figuren näher beschrieben. Es zeigt:
- Figur 1: in einer Seitenansicht eine vertikale Schlauchbeutelmaschine mit einer von einer Vorratsrolle abgewickelten Folienbahn, welche mittels eines Folienabzuges weitertransportiert wird, wobei an einer Umlenkkante einer Formschulter die Folienbahn zu einem abgeflachten Folienschlauch umgeformt wird, welcher ein abgeflachtes Füllrohr umgibt, mit einer Längssiegeleinrichtung und einer Quersiegeleinrichtung zum Verschweißen des Folienschlauches, und mit einer Trenneinrichtung in einer Quersiegelbacke zum Abtrennen eines befüllten und verschweißten Flachbeutels vom Folienschlauch;
- Figur 2: in einer Ansicht von oben die Formschulter gemäß Figur 1, wobei die Umlenkkante der Formschulter eine größere Breite a als Tiefe b aufweist;
- Figur 3: in einem Querschnitt eine Ausgestaltung eines abgeflachten Füllrohres, sowie
- Figur 4: in einem Querschnitt eine weitere Ausgestaltung eines abgeflachten Füllrohres.

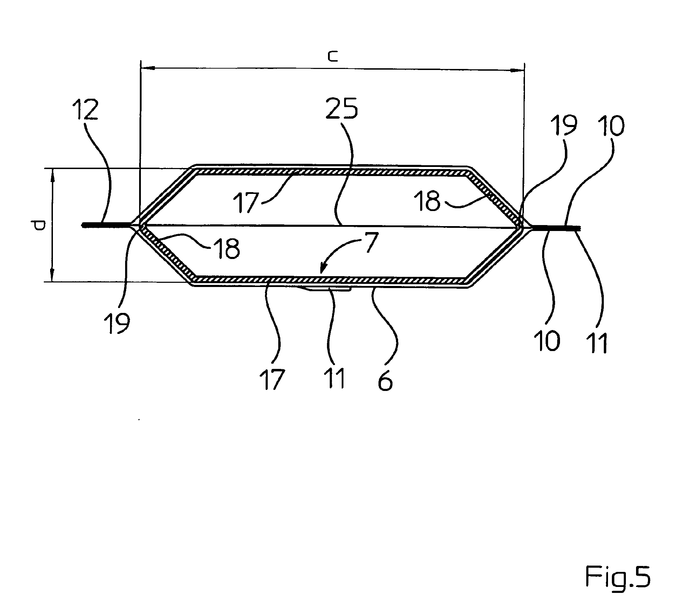

- Figur 5: in einer Schnittdarstellung das entlang A-A der Figur 1 geschnittene, abgeflachte Füllrohr der Figur 1, mitsamt dem Folienschlauch, welcher entlang seiner gegenüberliegenden Ränder verschweißt ist;

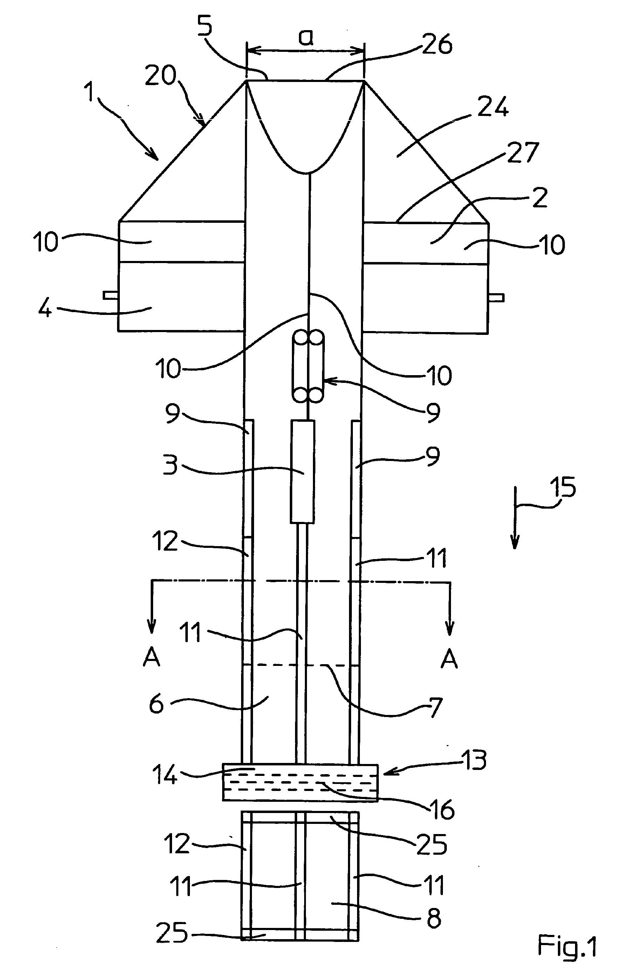

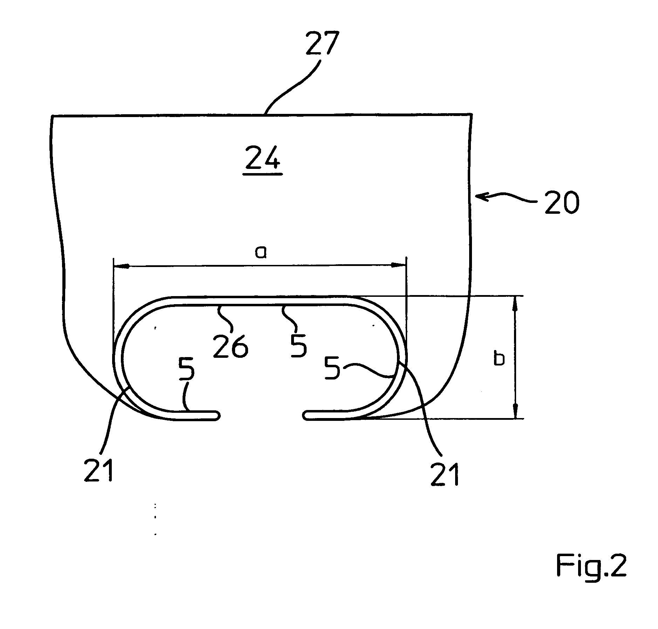

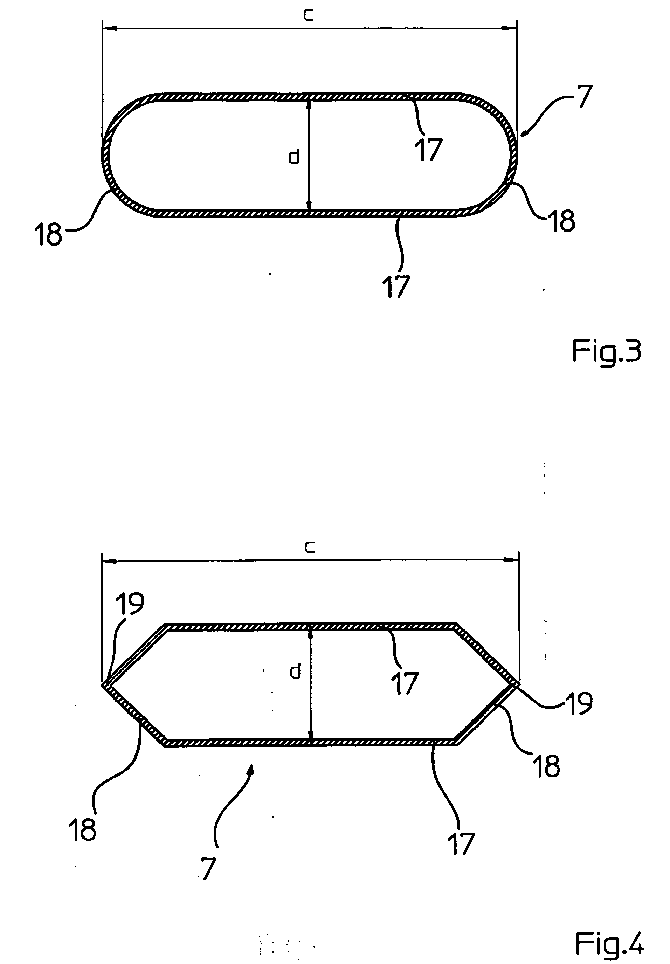

Bei einer vertikalen Schlauchbeutelmaschine 1 (Figur 1) wird eine Folienbahn 2 mittels eines Abzugs 3 von einer Vorratsrolle 4 abgewickelt und mittels einer Umlenkkante 5 (Figur 2) zu einem Folienschlauch 6 umgeformt. Der Folienschlauch 6 umschließt ein Füllrohr 7 welches abgeflacht ist (Figur 3, 4), um flache Beutel 8 herzustellen.

Zwei Längssiegeleinrichtungen 9 auf gegenüberliegenden Seiten des Füllrohres 7 sind zum Längsverschweißen des Folienschlauches 6 vorgesehen, wobei eine Längssiegeleinrichtung 9 die Ränder 10 der Folienbahn 2 miteinander verschweißt, um eine randseitige Längsnaht 11 des flachen Beutels 8 zu erzeugen. Mit den anderen Längssiegeleinrichtungen 9 werden parallel zur Längsnaht 11 verlaufende, weitere randseitige Längsnähte 11, 12 im dort entsprechend ausgelenkten Folienschlauch 6 erreicht. Die Beutelform ist infolge des abgeflachten Füllrohres 6 und der beiden randseitigen Längsnähte 11, 12 relativ flach (Flachbeutel). Die Breite c des Füllrohres 7 ist etwas mehr als doppelt so groß wie dessen Tiefe d. Das Füllrohr 7 weist zwei parallel zueinander und parallel zur Breite c ausgerichtete Rohrwände 17 auf, welche über nach außen gerichtete Folienauslenker 18 miteinander verbunden sind. Die Folienauslenker 18 weisen jeweils eine abgerundete Spitze 19 auf. Sie könnten aber auch die Form eines Kreisbogens (Figur 3) oder eine nicht abgerundete Spitze 19 (Figur 4) beschreiben.

Eine Quersiegeleinrichtung 13 mit gegeneinander bewegbaren Quersiegelbacken 14 ist zum Verschweißen des abgeflachten Folienschlauches 6 quer zu seiner Transportrichtung 15 unter Erzeugung von Quernähten 25 vorgesehen. Eine Trenneinrichtung 16 dient zum Abtrennen eines erzeugten Beutels 8 vom Folienschlauch 6.

Die Vorrichtung 20 zum Umformen der Folienbahn 2 ist analog Figur 2 ausgebildet.
- a: Breite der Umlenkkante 5
- b: Tiefe der Umlenkkante 5
- c: Breite des Füllrohres 7
- d: Tiefe des Füllrohres 7
- 1: vertikale Schlauchbeutelmaschine
- 2: Folienbahn
- 3: Abzug
- 4: Vorratsrolle
- 5: Umlenkkante
- 6: Folienschlauch
- 7: Füllrohr
- 8: Beutel
- 9: Längssiegeleinrichtung
- 10: Rand
- 11: Längsnaht
- 13: Quersiegeleinrichtung
- 14: Quersiegelbacke
- 15: Transportrichtung
- 16: Trenneinrichtung
- 17: Rohrwand
- 18: Folienauslenker
- 19: Spitze
- 20: Vorrichtung
- 21: Krümmung
- 24: tragende Fläche
- 25: Quernaht
- 26: Mittelstück
- 27: Folienlaufkante

## Patentansprüche

1. Vertikale Schlauchbeutelmaschine (1) mit einem Füllrohr (7), dessen Breite (c) größer als dessen Tiefe (d) ist, wobei eine Folienbahn (2) mittels eines Abzugs (3) von einer Vorratsrolle (4) abgewickelt und mittels einer Umlenkkante (5) einer an das Füllrohr (7) angepassten Vorrichtung (20) zum Umformen der Folienbahn (2) zu einem Folienschlauch (6) umgeformt wird, wobei der Folienschlauch (6) über eine Folieneinlaufkante (27) der Vorrichtung (20) in diese einläuft und durch Passieren der Vorrichtung (20) das Füllrohr (7) umschließt, eine Längssiegeleinrichtung (9) zum Verschweißen der Ränder (10) der Folienbahn (2) und damit zum Längsverschweißen des Folienschlauches (6) vorgesehen ist, eine Quersiegeleinrichtung (13) mit gegeneinander bewegbaren Quersiegelbacken (14) zum Verschweißen des Folienschlauches (6) quer zu seiner Transportrichtung (15) vorgesehen ist, mit einer Trenneinrichtung (16) zum Abtrennen eines erzeugten Beutels (8) vom Folienschlauch (6), wobei die Umlenkkante (5) ein Mittelstück (26) aufweist, welches sich in eine parallel zur Ausrichtung der Folieneinlaufkante (27) ausgerichtete Breite (a) erstreckt, wobei sich an das Mittelstück (26) an gegenüberliegenden Seiten jeweils eine Krümmung (21) anschließt, die maximale Entfernung der Krümmungen (21) die Breite (a) beschreibt, die Breite (a) der Umlenkkante (5) größer als deren Tiefe (b) ist, und das Füllrohr (7) an seinen beiden Schmalseiten jeweils einen Folienauslenker (18) zum Auslenken des Folienschlauches (6) aufweist, der sich vorzugsweise über die gesamte Länge des Füllrohres (7) erstreckt, **dadurch gekennzeichnet, dass** auf zwei gegenüberliegenden Seiten des Füllrohres (7), an denen die Folienauslenker (18) vorgesehen sind, jeweils eine vom Folienauslenker (18) weg weisende Längsnaht (11, 12) im Folienschlauch (6) ausgebildet ist, zu deren Erzeugung jeweils eine Längssiegeleinrichtung (9) zum Verschweißen der Seitenränder der Beutel (8) vorgesehen ist, und dass die die Ränder (10) der Folienbahn (2) verschweißende Längssiegeleinrichtung (9) auf der der Folieneinlaufkante (27) gegenüber liegenden Seite des Füllrohres (7) angeordnet ist.

2. Schlauchbeutelmaschine nach Anspruch 1, **dadurch gekennzeichnet, dass** die Breite (c) des Füllrohres (7) mindestens anderthalb mal so groß wie dessen Tiefe (d) ist.

3. Schlauchbeutelmaschine nach Anspruch 1 oder Anspruch 2, **dadurch gekennzeichnet, dass** das Füllrohr (7) zwei parallel zueinander und parallel zur Breite (c) des Füllrohres (7) ausgerichtete Rohrwände (17) aufweist.

4. Schlauchbeutelmaschine nach Anspruch 1, **dadurch gekennzeichnet, dass** der Folienauslenker (18) im Querschnitt kreisbogenförmig ausgestaltet ist.

5. Schlauchbeutelmaschine nach Anspruch 1, **dadurch gekennzeichnet, dass** der Folienauslenker (18) im Querschnitt eine Spitze (19) aufweist, welche vorzugsweise mittig am Folienauslenker (18) vorgesehen ist.

6. Schlauchbeutelmaschine nach Anspruch 5, **dadurch gekennzeichnet, dass** die Spitze (19) abgerundet ist.

## Claims

1. Vertical bag forming, filling and sealing machine (1) having a filling tube (7), the width (c) of which is greater than its depth (d), a film web (2) being unwound from a supply roll (4) by means of a take-off (3) and formed, by means of a deflecting edge (5) of a device (20) matched to the filling tube (7) and serving to form the film web (2), into a film tube (6), the film tube (6) entering the device (20) via a film entry edge (27) of the latter and, by passing through the device (20), enclosing the filling tube (7), a longitudinal-sealing device (9) for welding the edges (10) of the film web (2) and thus for longitudinal welding of the film tube (6) being provided, a transverse-sealing device (13) which has transverse-sealing jaws (14) movable towards one another and serving to weld the film tube (6) transversely with respect to its transporting direction (15) being provided, and having a severing device (16) for severing a produced bag (8) from the film tube (6), the deflecting edge (5) having a middle piece (26) which extends over a width (a) oriented parallel to the orientation of the film entry edge (27), the middle piece (26) being adjoined at opposite sides by in each case one curve (21), the maximum distance of the curves (21) describing the width (a), the width (a) of the deflecting edge (5) being greater than its depth (b), and the filling tube (7) having at its two narrow sides in each case one film deflector (18) for deflecting the film tube (6), which preferably extends over the entire length of the filling tube (7), **characterised in that**, on two opposite sides of the filling tube (7), on which sides the film deflectors (18) are provided, in each case one longitudinal seam (11, 12) pointing away from the film deflector (18) is formed in the film tube (6), for the production of which seams in each case one longitudinal-sealing device (9) for welding the lateral edges of the bags (8) is provided, and **in that** the longitudinal-sealing device (9) which welds the edges (10) of the film web (2) is arranged on that side of the filling tube (7) which lies opposite the film entry edge (27).

2. Bag forming, filling and sealing machine according to Claim 1, **characterised in that** the width (c) of the filling tube (7) is at least one and a half times greater than its depth (d).

3. Bag forming, filling and sealing machine according to Claim 1 or Claim 2, **characterised in that** the filling tube (7) has two tube walls (17) oriented parallel to one another and parallel to the width (c) of the filling tube (7).

4. Bag forming, filling and sealing machine according to Claim 1, **characterised in that** the film deflector (18) is configured in the shape of a circular arc in cross-section.

5. Bag forming, filling and sealing machine according to Claim 1, **characterised in that** the film deflector (18) has, in cross-section, a point (19), which is provided preferably at the centre of the film deflector (18).

6. Bag forming, filling and sealing machine according to Claim 5, **characterised in that** the point (19) is rounded.

## Revendications

1. Ensacheuse verticale (1) comportant un tube de remplissage (7), dont la largeur (c) est supérieure à la profondeur (d) de celui-ci, une bande de film (2) étant déroulée d'une bobine de stockage (4) au moyen d'un dispositif de traction (3) et étant formée au moyen d'un bord de conformation (5) d'un dispositif (20) adapté au tube de remplissage (7) en vue de conformer la bande de film (2) en un tube de film (6), sachant que le tube de film (6) passe par un bord d'admission du film (27) du dispositif (20) pour entrer dans celui-ci et, après le franchissement du dispositif (20), entoure le tube de remplissage (7), un dispositif de scellage longitudinal (9) est prévu pour souder les bords (10) de la bande de film (2) et donc pour la soudure longitudinale du tube de film (6), un dispositif de scellage transversal (13) avec des mâchoires de soudure transversale (14), aptes à se déplacer l'une contre l'autre, est prévu pour la soudure du tube de film (6) perpendiculairement à sa direction de transport (15), comportant un dispositif de coupe (16) pour séparer un sachet (8) fini du tube de film (6), sachant que le bord de conformation (5) comporte une partie centrale (26) qui s'étend avec une largeur (a) parallèle à l'orientation du bord d'admission du film (27), la partie centrale (26) se prolongeant sur chacun des côtés opposés par une courbure (21), la distance maximale entre les courbures (21) définissant la largeur (a), la largeur (a) du bord de conformation (5) étant supérieure à la profondeur (b) de celles-ci, et le tube de remplissage (7) comportant sur ses deux petits côtés respectivement un élément de déviation du film (18) qui est destiné à dévier le tube de film (6) et qui s'étend de préférence sur toute la longueur du tube de remplissage (7), **caractérisée en ce que** sur chacun des deux côtés face à face du tube de remplissage (7), sur lesquels sont prévus les éléments de déviation du film (18), est réalisé dans le tube de film (6) une soudure longitudinale (11, 12), qui est dirigée en s'écartant de l'élément de déviation du film (18) et pour la réalisation de laquelle il est prévu respectivement un dispositif de scellage longitudinal (9) pour souder les bords latéraux des sachets (8), et **en ce que** le dispositif de scellage longitudinal (9) soudant les bords (10) de la bande de film (2) est disposé sur le côté du tube de remplissage (7), situé en face du bord d'admission du film (27).

2. Ensacheuse verticale selon la revendication 1, **caractérisée en ce que** la largeur (c) du tube de remplissage (7) est au moins une fois et demie plus grande que la profondeur (d) de celui-ci.

3. Ensacheuse verticale selon la revendication 1 ou 2, **caractérisée en ce que** le tube de remplissage (7) comporte deux parois de tube (17) orientées parallèlement l'une à l'autre et parallèlement à la largeur (c) du tube de remplissage (7).

4. Ensacheuse verticale selon la revendication 1, **caractérisée en ce que** l'élément de déviation du film (18) est réalisé avec une section en forme d'arc de cercle.

5. Ensacheuse verticale selon la revendication 1, **caractérisée en ce que** l'élément de déviation du film (18) comporte une pointe (19) sur une coupe transversale, laquelle est prévue de préférence au milieu sur l'élément de déviation du film (18).

6. Ensacheuse verticale selon la revendication 5, **caractérisée en ce que** la pointe (19) est arrondie.
